# EUROPÄISCHE PATENTSCHRIFT

(11) **EP 0 493 715 B1**
(45) Veröffentlichungstag und Bekanntmachung des Hinweises auf die Patenterteilung: **19.07.1995**
(21) Anmeldenummer: 91121247.0
(22) Anmeldetag: 11.12.1991
(51) Int. Cl.: D21B 1/32, D21B 1/02

(54) **Verfahren zum Aufbereiten von Altpapier**
Process for treating waste paper
Procédé pour le traitement des vieux papiers

(30) Priorität: 29.12.1990 DE 4042225
(43) Veröffentlichungstag der Anmeldung: 08.07.1992
(73) Patentinhaber: PWA INDUSTRIEPAPIER GmbH, 83064 Raubling (DE)
(72) Erfinder: Menges, Wilhelm, W-8204 Brannenburg (DE)
(74) Vertreter: Fuchs Mehler Weiss

(56) Entgegenhaltungen:
- AT-A- 378 792
- DE-A- 3 334 448
- TAPPI JOURNAL. Bd. 71, Nr. 6, Juni 1988, ATLANTA US Seiten 87 - 91; T. BLISS:'Reject handling in secondary fiber systems'

## Beschreibung

Die Erfindung betrifft ein Verfahren zum Aufbereiten von Altpapier, bei dem das Altpapier in Wasser suspendiert und unter Einwirkung von Agitationsmitteln weitgehend zerfasert wird, sich im wesentlichen im Auflöseaggregat ansammelnder Schwerschmutz abgesondert und entsorgt wird, im Auflöseaggregat und/oder in nachgeschalteten Sortierstufen sogenannter Leichtschmutz aus der erhaltenen Faserstoffsuspension abgesondert und die gereinigte Faserstoffsuspension für die Papiererzeugung verwendet wird. Ein solches Verfahren ist aus der DE-A-3 334 448 bekannt.

Altpapier wird in zunehmendem Maße wieder der Papierherstellung zugeführt. Das Problem der Altpapieraufbereitung liegt darin, papierfremde Bestandteile und Verunreinigungen aus dem Rohstoff zu entfernen. Seit Jahrzehnten verarbeitet die deutsche Papierindustrie einen hohen Anteil an sogenanntem sortierten Altpapier, welches weitgehend aus Abfällen aus der papierverarbeitenden Industrie kommt und in Ballen gepreßt zum Wiedereinsatz als Rohstoff für die Papiererzeugung gelangt. Solches Altpapier enthält zwar auch einen gewissen Anteil an Verunreinigungen, ist in der Aufbereitung aber nicht sehr problematisch. Es besteht jedoch zunehmend die Notwendigkeit, auch mindere Altpapiersorten bis zum gesammelten Haushaltsabfall hin mit zu verwenden. Derartiges Altpapier setzt man vorzugsweise für die Erzeugung von Verpackungspapieren, insbesondere für die Erzeugung von denjenigen Papieren ein, aus denen Wellpappe hergestellt wird.

Für die Aufbereitung herkömmlichen Altpapieres, welches wenig oder gar keinen Haushaltsabfall enthält, hat sich eine Art von Aufbereitungsanlage durchgesetzt, die etwa wie folgt aussehen kann:
Das Altpapier wird unter Wasserzugabe in einem Auflöseaggregat, einem sogenannten Pulper, der speziell für die Verarbeitung von Altpapier ausgerüstet ist, unter Einwirkung starker Agitation aufgelöst bzw. zerfasert. Schwerschmutz wie Steine, Metallteile und dergleichen sinken in einen eigens dafür vorgesehenen Auffangraum am Boden des Pulpers und werden von dort von Zeit zu Zeit ausgeschleust. Fremdbestandteile wie Gewebestücke, großflächige Folienstücke, Seile, Schnüre und dergleichen verspinnen sich durch die Agitation im Pulper zu einem sogenannten Zopf, der langsam aus dem Pulper abgezogen wird und sich jeweils durch Anlagerung von neuen, zopfbildenden Fremdbestandteilen verlängert. Ein großer Anteil von bei der Altpapierauflösung anfallenden und auszuscheidenden Fremdstoffen, die sich nicht unmittelbar in einzelne Fasern für die Wiederverwendung in der Papiererzeugung einsetzen lassen, besteht aus sogenanntem Leichtschmutz. Hierzu gehören unter anderem Kunststoffteilchen, aber auch Stücke nichtauflösbaren Papiers, welches ein- oder zweiseitig mit Kunststoffen beschichtet ist. Durch ein gewisses Strömungsbild im Pulper sammelt sich dieser Leichtschmutz bevorzugt an einer bestimmten Stelle, beispielsweise in der Nähe der Pulperwand, von wo aus er kontinuierlich in gewissem Anteil abgezogen werden kann.

Die aus dem Pulper über eine Siebplatte abgezogene Faserstoffsuspension wird im allgemeinen noch über ein oder mehrere Sortierstufen geführt, in denen weiterer, meist in kleinerer Form anfallender Leichtschmutz abgetrennt wird. In einer typischen Anlage wird die Faserstoffsuspension dann weiter mittels eines Sortierers in eine Langfaserkomponente und eine Kurzfaserkomponente aufgeteilt. Die Langfaserkomponente wird beispielsweise mittels eines Banddruckfilters zu einer hohen Stoffdichte eingedickt, um vor Verwendung auf der Papiermaschine in einem Hochkonsistenzzerfaserer noch weiter zerfasert zu werden. Nach anschließender Mahlung in einem Refiner bei wieder reduzierter Stoffdichte wird diese Langfaserkomponente dann im allgemeinen zur Herstellung von Testliner, d.h. demjenigen Papier mitverwendet, welches die Decklage einer Wellpappe bildet und eine hohe Festigkeit aufweisen soll. Die Kurzfaserkomponente wird zur Herstellung der Mittellage für Wellpappe verwendet, nämlich demjenigen Papier, welches später die Welle in der Wellpappe bildet und als Wellpappenrohpapier bezeichnet wird.

Der aus der Altpapieraufbereitung gesammelte ausgeschiedene Leichtschmutz wird eventuell noch einem Wasch- oder Sortiervorgang unterzogen, um ihn von mitgeführtem Faserstoff zu befreien, er wird dann aber nach Entwässerung zusammen mit dem im Pulper ausgeschiedenen Schwerschmutz einem Container für die Ablagerung auf einer Deponie zugeführt. Bei Verarbeitung von sortiertem Altpapier hält sich die Menge des zu entsorgenden Schwer- und Leichtschmutzes in Grenzen, so daß hierdurch keine besonderen Deponieprobleme entstehen.

Es hat sich jedoch gezeigt, daß bei zunehmender Mitverarbeitung von Sammelaltpapier in einer Anlage des vorstehend beschriebenen Typs der Leichtschmutzanteil erheblich ansteigt. Dies liegt daran, daß das Sammelaltpapier in erhöhtem Maße auch Verpackungsmaterialien aus Kunststoff, insbesondere aber auch kunststoffbeschichtete Papiere enthält, die mit einer herkömmlichen Altpapieraufbereitungsanlage nicht aufschließbar sind und daher als Leichtschmutz anfallen. Eine Analyse des Leichtschmutzes bei höherem Einsatz von Sammelaltpapier hat ergeben, daß dieser Leichtschmutz tatsächlich zu einem hohen Anteil Stoffe enthält, die ihrer Natur nach wieder verwendbar wären.

Der Erfindung liegt daher die Aufgabe zugrunde, ein Verfahren aufzuzeigen, mit dem es möglich ist, in erster Linie den bei erhöhter Mitverwendung von Sammelaltpapier in einer herkömmlichen Altpapieraufbereitungsanlage anfallenden Leichtschmutz, aber gegebenenfalls je nach Zusammensetzung das Zopfmaterial auch dieses zu möglichst hohem Anteil in wiederverwendbare Roh- oder Halbstoffe aufzuarbeiten. Leichtschmutz und Zopfmaterial seien im folgenden als Fremdstoff bezeichnet.

Diese Aufgabe wird erfindungsgemäß durch folgende Verfahrensschritte gelöst:
a) Zerkleinern des Fremdstoffes in einer ersten Zerkleinerungsstufe in vergleichmäßigte Flächenabschnitte, die in wässriger Suspension förderbar sind,
b) weiteres Zerkleinern der vergleichmäßigten Flächenabschnitte in einer zweiten Zerkleinerungsstufe in kleine Flächenstücke in wässriger Suspension,
c) Disintegrieren der kleinen Flächenstücke in wässriger Suspension,
d) Auftrennen der Suspension in eine im wesentlichen Faserstoff enthaltende Fraktion und in eine im wesentlichen nicht integrierbare Feststoffe enthaltende Fraktion, und
e) Aufbereitung der Reststoffraktion zur Holung und Wiederverwertung von darin enthaltenen Thermoplasten.

Wenn im Rahmen dieser Beschreibung im Zusammenhang mit der Aufbereitung des Altpapieres und des Leichtschmutzes von Disintegration oder Zerfaserung gesprochen wird, so ist damit einerseits lediglich die Zerfaserung desjenigen Anteiles des Rohstoffes gemeint, der aus Papierfaserstoff besteht, und andererseits die Ablösung des Faserstoffes vom Nichtfaserstoff oder umgekehrt. Die maßgeblich im Fremdstoff bzw. im Leichtschmutz enthaltenen Kunststoff-Folienteile beispielsweise werden dabei nicht zerfasert sondern höchstens zerkleinert. Für die Angabe der Suspensionskonzentrationen wird im folgenden die in der Papierindustrie übliche Angabe "% atro" verwendet, welche sich auf Prozent absolut trocken gedachten Feststoffes in der Suspension bezieht.

Die Vorzerkleinerung des Fremdstoffes erfolgt eventuell unter Wasserzugabe in einer hierfür geeigneten Schneid- oder Zerreißmühle in Flächenstücke von möglichst unter 40 mm Durchmesser. Der als Leichtschmutz anfallende Fremdstoff wird dann vorzugsweise in Flächenstücke im Größenbereich von 2 bis 15 mm und besonders bevorzugt in Flächenstücke im Bereich von 6 mm bis 12 mm Durchmesser zerkleinert. Der Fremdstoff enthält natürlich von vornherein auch schon Teilchen, deren Größe wesentlich kleiner ist.

Zur Schonung der Vorzerkleinerungswerkzeuge in der ersten Stufe kann es wünschenswert sein, daß der Fremdstoff nochmals auf Schwerschmutzbestandteile, wie kleine Stein- oder Metallteile gesichtet wird.

Dies erfolgt zweckmäßigerweise bereits in wässriger Aufschlämmung durch geeignete Sedimentationseinrichtungen. Insofern man ein genügend robustes Zerkleinerungsaggregat für die erste Zerkleinerungsstufe verwendet, kann es jedoch zweckmäßig sein, eine weitere Schwerschmutzabscheidung erst zwischen der ersten und der zweiten Zerkleinerungsstufe vorzunehmen, weil durch die erste Zerkleinerung unter Umständen noch zusätzlicher Schwerschmutz freigelegt werden könnte. Das feinzerkleinernde und disintegrierende Zerkleinerungsaggregat für die zweite Stufe ist jedoch im allgemeinen schwerschmutzempfindlich, so daß die zusätzliche Schwerschmutzabscheidung spätestens vor der zweiten Zerkleinerungsstufe erfolgen sollte. Auf geeignete Werkzeuge für die Zerkleinerungsaggregate wird im Rahmen der Zeichnungsbeschreibung noch eingegangen.

In bevorzugter Ausführungsform werden die ersten Verfahrensschritte in einem eigens dafür kombinierten Aggregat ausgeführt, welches im wesentlichen Mittel für die erste Zerkleinerungsstufe aufweist, in der mit und ohne Flüssigkeitszusatz gearbeitet werden kann, weiterhin einen Zwischentrog mit Rühreinrichtungen, der zusätzlich mit einer Schwerschmutzsammelkammer und einer Schwerschmutzausschleuseinrichtung versehen ist, und Mittel für die zweite Zerkleinerungsstufe.

Die vorstehend beschriebenen Verfahrensschritte sind zur Einleitung der Aufarbeitung des aus einer Altpapierauflöseanlage erfaßten Leichtschmutzes geeignet und auch ausreichend. Zusätzliche Maßnahmen können erforderlich sein, wenn im Rahmen der Fremstoffaufarbeitung auch der Zopf aus dem Pulper mit aufgearbeitet werden soll. Ob dies zweckmäßig ist oder nicht, wird sich aus den jeweiligen Verhältnissen ergeben. Da der Zopf im wesentlichen großflächige Fremdbestandteile erfaßt, können sich darunter durchaus großflächige Verpackungsfolien aus Polyethylen und größere Teile folienbeschichteten Papieres befinden, für deren Disintegration die Auflösearbeit im Pulper nicht ausreichend ist. Sollten diese Bestandteile einen hohen Anteil des Zopfes bilden, kann seine Mitverarbeitung gemäß dem erfindungsgemäßen Verfahren gerechtfertigt sein.

Soll der Zopf mit aufbereitet werden, ist es im allgemeinen zweckmäßig, den Zopf derart zu zerkleinern, daß er in etwa gleichem Zustand wie der übrige Leichtschmutz in die erste Zerkleinerungsstufe gelangt. Deshalb wird erfindungsgemäß vorgesehen, den Zopf, bevor sein Material in die erste Zerkleinerungsstufe gelangt, einer ein-oder zweistufigen Grobzerkleinerung zu unterwerfen, wobei die erste Grobzerkleinerungsstufe des Zopfes lediglich in einem Zerschneiden des Zopfes in kleinere Abschnitte besteht und die weitere Grobzerkleinerung in der Aufteilung dieser Abschnitte in eine Form beruht, wie sie für die erste erfindungsgemäße Zerkleinerungsstufe geeignet ist. Für die Grobvorbereitung des Zopfes kann hier ein ähnliches, kombiniertes Aggregat Verwendung finden, wie es bevorzugt für die erste und zweite Zerkleinerungsstufe vorgeschlagen wird, wobei dieses Aggregat für den anderen Einsatzfall lediglich mit anderen Werkzeugen bestückt wird.

Die die zweite Zerkleinerungsstufe nach Anspruch 1 verlassende, feinzerkleinerte und im wesentlichen disintegrierte Suspension kann, bevor sie der Auftrennung in ihre Fraktionen zugeführt wird, zum Nachdisintegrieren in einer Zwischenbütte gestapelt werden, welche mit einem entsprechend kräftigen Rührwerk ausgerüstet ist, welches eine zusätzliche Disintegration oder Zerfaserung des Stoffes fördert. Die für eine solche Maßnahme zweckmäßigerweise einzustellenden Stoffdichten sind durch den Fachmann je nach Anforderung zu wählen.

Bevor auf die Weiterverarbeitung der aus der Fremdstoffsuspension nach Auftrennung erhaltenen Fraktionen eingegangen wird, soll das Wesentliche des erfindungsgemäßen Verfahrens nochmals herausgestellt werden:
Die erfindungsgemäß durchgeführten Zerkleinerungsschritte haben eine grundsätzlich andere Wirkungsweise als der herkömmliche Pulper zur Altpapierauflösung. Beim Pulper wird lediglich mit Agitationswirkungen und Suspensionsscherkräften gearbeitet, die zwar das Auftrennen von solchen Papierfaserstoffverbänden ermöglichen, die nicht durch Kunststoffe oder andere Mittel fest miteinander verbunden sind, der Pulper ist jedoch nicht in der Lage, kunststoffhaltige Flächenstücke zu zerteilen und mit ihnen verbundene Fasern freizulegen, weswegen solche Elemente bereits schon im Pulper oder in der nachfolgenden Sortierung aus der Stoffsuspension ausgeschieden werden.

Das wesentliche der erfindungsgemäßen Maßnahmen ist daher eine echte Zerkleinerung. Die erste Zerkleinerungsstufe soll dabei bewirken, daß die Fremdstoffe in eine Größenordnung zerkleinert werden, in der sie durch übliche Suspensionsfördermittel wie Rührwerke und suspensionsgeeignete Pumpen in wässriger Suspension förderbar sind. Der zweite Zerkleinerungsschritt in relativ kleine Flächenstücke, deren Größe durch die Passierbarkeit durch ein vorgegebenes Sieb kontrolliert wird, soll die Suspension in einen Zustand überführen, in dem bestmögliche Eignung zur Auftrennung der kleinen Flächenstücke in Faserstoff und nicht zerfaserbare Bestandteile besteht. Es wurde zum Beispiel beobachtet, daß sich bei kunststoffbeschichteten Verpackungspapieren und Kartons die Kunststoffschicht vom Substrat unter Energieeinwirkung ablösen läßt, wenn die betroffenen Flächenstückchen eine genügende Kleinheit haben. Wie stark wirklich zerkleinert wird, ist somit einerseits eine Frage der Trennbarkeit von Faserstoffen und Kunststoffen und andererseits eine Frage der Erhaltung einer erwünschten Festigkeit des Faserstoffes. Durch stärkere Zerkleinerung werden bekanntlich mehr Fasern im Material zerschnitten, so daß die durchschnittliche Faserlänge des freigelegten Faserstoffes durch eine hohe vorherige Zerkleinerung sinkt. Hier ist durch den Fachmann je nach Ausgangsmaterial und nach den Zielsetzungen ein Optimum in der Behandlungsweise zu ermitteln.

Die Auftrennung der nach der zweiten Zerkleinerungsstufe erhaltenen Fremdstoffsuspension in ihre Fraktionen kann mit marktüblichen Geräten, beispielsweise einem Turbowasher der Firma Voith in Heidenheim erfolgen.Da bei der Aufbereitung allein des Fremdstoffes im Gegensatz zur Aufbereitung von beispielsweise gesamten folienbeschichteten Verpackungskartons der Faserstoffanteil die kleinere Komponente bildet, ist hier im allgemeinen bezüglich des Reststoffes eine einstufige Auswaschung ausreichend. Außerdem ist es aus weiter unten noch zu beschreibenden Gründen eventuell sogar wünschenswert, daß ein gewisser Anteil von Fasern im Reststoff verbleibt.

Als wiederzugewinnende Komponente des Reststoffes sind im wesentlichen die Thermoplaste vorgesehen, aus denen er zu hohem Anteil besteht. Der Reststoff enthält zu geringerem Anteil im allgemeinen aber auch noch andere Kunststoffe meist mit höherem spezifischem Gewicht wie PVC und dergleichen. Diese schwereren Kunststoffe werden vorzugsweise in einer ein- oder zweistufigen Zykloneinrichtung aus der Reststoffsuspension ausgeschieden. Der Akzeptstoff aus dieser Zyklonsortiereinrichtung wird dann zweckmäßigerweise auf einem Schüttelsieb grobentwässert, um dann beispielsweise in einer Zentrifuge vorentwässert zu werden. Das hierbei anfallende Filtrat kann zur Suspensionsverdünnung in einer vorangehenden Stufe wiederverwendet werden.

Nach der Zentrifugenentwässerung wird der Reststoff dann getrocknet und kann in einem Silo zwischengelagert werden. Im Grunde genommen ist der fast ausschließlich aus Thermoplasten bestehende Reststoff in dieser Form bereits handhabungs- bzw. abfüllfähig, um ihn als Rohstoff einer weiteren Verarbeitung zuzuführen. Zweckmäßigerweise findet jedoch im Anschluß an die Trocknung des Reststoffes eine Pelletisierung statt.

Es hat sich in Versuchen gezeigt, daß das so erhaltene Thermoplastgranulat in Kunststoffextrudern zu der Herstellung verschiedenster Gegenstände verarbeitet werden kann. Der noch im Granulat enthaltene Faserstoffanteil von etwa 5 % hat sogar einen positiven Einfluß auf verschiedene Festigkeitseigenschaften des Kunststoffes, die erhalten werden, solange die Kunststoffverarbeitung nicht bei Temperaturen erfolgt, bei denen sich der Faserstoff zersetzt.

Die bei der Trennung der Fremdstoffsuspension erhaltene Faserstoffkomponente wird zweckmäßigerweise auf eine höhere Stoffdichte eingedickt, um sie einem für die Papierherstellung üblichen Mahlvorgang zu unterwerfen.

Es hat sich gezeigt, daß die aus dem Fremdstoff zurückgewonnene Faserstoffkomponente ein unter Gesichtspunkten der Papierherstellung hochwertiger Langfaserstoff ist. Um die Reinigungsanforderungen jedoch nicht zu hoch zu treiben, wird er zweckmäßigerweise bei der Herstellung von Wellpappenrohpapieren dem sich aus der weiter oben beschriebenen Altpapieraufbereitung ergebenden Kurzfaserstoff zur Festigkeitssteigerung zugegeben.

Im Rahmen der Erfindung ist eine besondere Maßnahme entwickelt worden, diese Langfaserkomponente für die Herstellung von Wellpappenrohpapier speziell geeignet und qualitätsverbessernd auszurüsten. Es hat sich nämlich gezeigt, daß sich beim Mahlvorgang des Faserstoffes in einem Refiner, der hierfür möglichst mit einer Steinzeuggarnierung versehen sein soll, feinteiliges Thermoplastmaterial an den Fasern fixieren läßt, welches bei der Papierherstellung unverändert bleibt, später aber bei der Wellpappenherstellung unter erhöhten Temperaturen steifigkeitserhöhend auf die Welle wirkt. Ein besonderes Merkmal des hier beschriebenen Verfahrens besteht daher darin, daß ein Teil des getrockneten oder auch schon granulierten Reststoffregenerates aus der Fremdstoffaufbereitung in einer Mühle auf Korngrößen von 0,6 mm und darunter fein gemahlen und dem Faserstoff bei der Refinermahlung zugesetzt wird. So werden im Rahmen der beschriebenen Fremdstoffwiederaufbereitung zwei Halbstoffe mit besonders vorteilhaften Eigenschaften, nämlich einerseits ein Thermoplastmaterial mit noch einem gewissen Faseranteil und andererseits ein Faserstoff mit angelagertem Thermoplastmaterial erzeugt.

Versuche haben ergeben, daß im Rahmen der vorstehend beschriebenen erfindungsgemäßen Fremdstoffaufarbeitung aus einer Tonne vorzerkleinerten Leichtschmutzes etwa 20 % Fasern und 50 % Thermoplaststoffe einer Wiederverwendung zugeführt werden können. Das bedeutet, daß etwa 70 % des Leichtschmutzes zu einem wiedereinsetzbaren Rohstoff aufbereitet werden können, während der Leichtschmutz im Rahmen einer herkömmlichen Altpapieraufbereitungsanlage insgesamt der Deponie zugeführt werden mußte.

### ZEICHNUNGSBESCHREIBUNG

Im Folgenden wird das erfindungsgemäße Verfahren zum Aufbereiten von Altpapier insoweit die hier maßgebliche Aufbereitung der bei der Papierauflösung abgesonderten Fremdstoffe betroffen ist, am Schema eines bevorzugten Verfahrensablaufes im Einzelnen näher erläutert. In den Zeichnungen stellen dar:
- Figur 1: ein Verfahrensschema für den Anlagenbereich um einen herkömmlichen Altpapierauflöser herum mit Erfassung der in diesem Bereich anfallenden und aus der Altpapiersuspension ausgeschiedenen Fremdstoffe, sowie deren Zerkleinerung und Überführung in eine sortierbare Suspension und
- Figur 2: ein Verfahrensschema für den Anlagenbereich, in dem die Fremdstoffsuspension in ihre Komponenten aufgeteilt und diese Komponenten zu erneut einsetzbaren Halbstoffen wieder aufbereitet werden.

Da dem Fachmann im Altpapieraufbereitungsbereich gewisse Grundoperationen geläufig und aus den Verfahrensschemata ohne weiteres erkennbar sind, wird in der folgenden Beschreibung nur auf die wesentlichen Verfahrenselemente eingegangen.

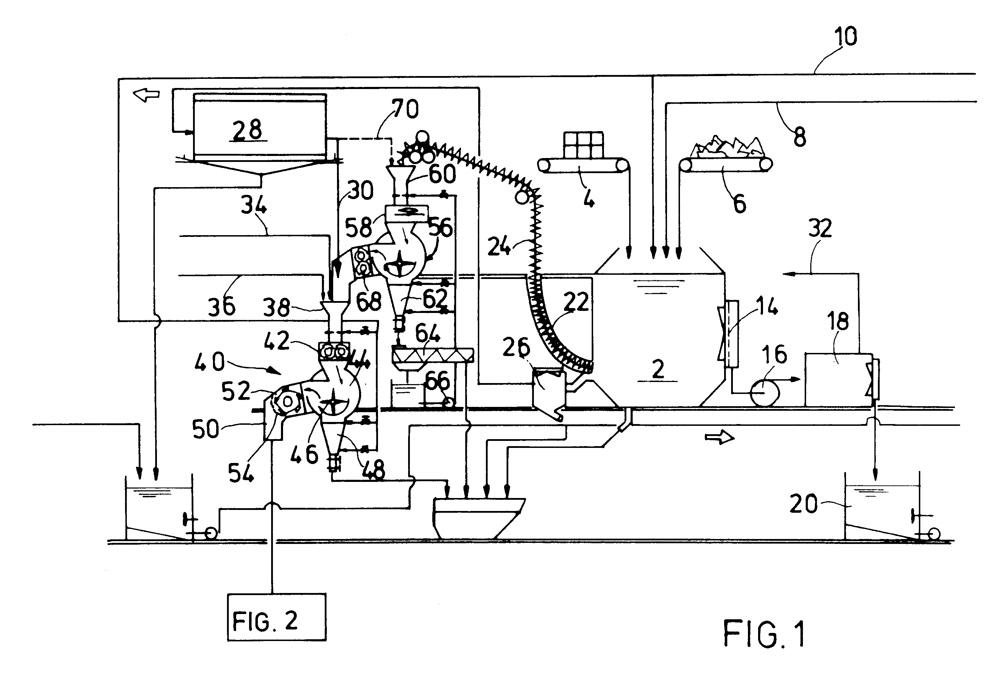

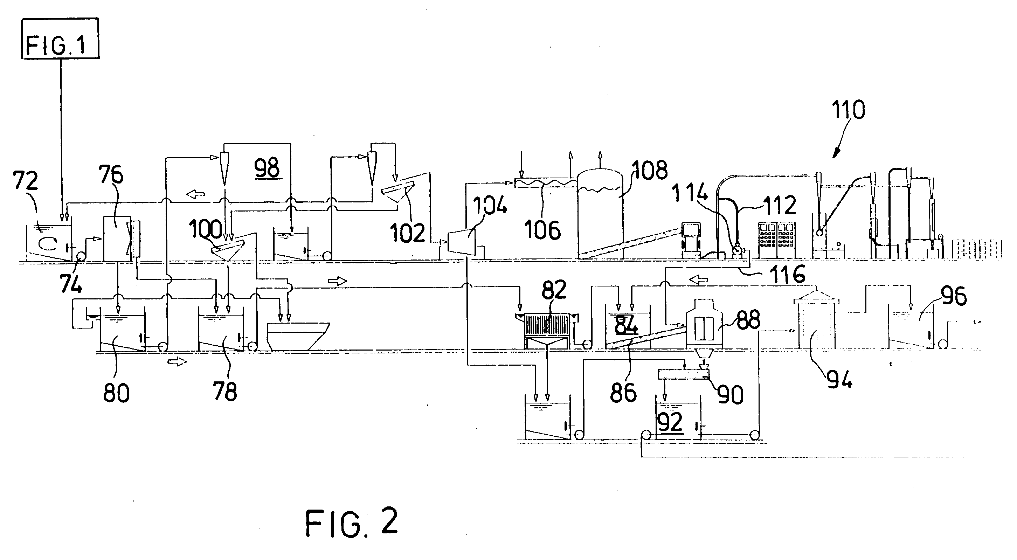

Zentrales Aggregat einer Altpapierauflösung Nach Figur 1 ist der Altpapierauflöser oder Pulper 2. Wie im Verfahrensschema dargestellt, wird dem Pulper 2 über ein Förderband 4 Handelsaltpapier in Form von Ballen zugeführt, während über ein weiteres Förderband 6 zusätzlich zu einem gewissen Anteil loses Altpapier als unsortierte Haushaltssammelware zugeführt wird. Weiterhin erhält der Pulper über eine Leitung 8 rückgeführte Fangstoffe aus der nachfolgenden Papierfabrik und über eine Leitung 10 Wasser für die Auflösung. Die bei der Auflösung des Altpapieres entstehende Faserstoffsuspension wird in der Nähe des Auflöseimpellers 14 kontinuierlich über Siebbleche mittels einer Pumpe 16 aus dem Pulper abgezogen und einer ersten, sogenannten A-Sortierstufe 18 zugeführt. Der Akzeptstoff aus dieser Sortierung gelangt in eine Bütte 20 und von dort weiter zu einer (nicht mehr dargestellten) B-Sortierung.

Aus dem Pulper 2 wird über ein Zopfrohr 22 kontinuierlich langsam ein Zopf 24 abgezogen, der sich in der Turbulenz des Pulpers aus sich verspinnenden Fremdstoffen, wie Schnüren, Drähten, aber auch großflächigen Kunststoffolien, Stoffresten und der Gleichen bildet. Unterhalb des Zopfrohres 22 wird aus dem Pulper kontinuierlich oder intermettierend eine Leichtschmutzkomponente abgezogen, die in einer Abscheideeinrichtung 26 noch von mitgerissenem Schwerschmutz befreit und dann einer Entwässerungssiebtrommel 28 zugeführt wird. Aus der Siebtrommel 28 tritt als weitegehend entwässerter Fremdstoff eine erste Leichtschmutzkomponente 30 aus. Der bei 32 anfallende Rejectstoff aus der ersten Sortierstufe 18 des Faserstoffes wird im allgemeinen nochmals nachsortiert und der Rejectstoff aus dieser Nachsortierung fällt als zweite Leichtschmutzkomponente 34 an. Schließlich fällt auch aus der (nicht dargestellten) B-Sortierung noch ein Rejectanteil an, der eine dritte Leichtschmutzkomponente 36 bildet.

Aus dem Verfahrensschema der Figur 1 ist erkennbar, daß sämtliche Leichtschmutzkomponenten, nämlich die Komponenten 30, 34 und 36 dem Aufgabetrichter 38 einer Aufarbeitungseinrichtung 40 zugeführt werden. Diese Vorrichtung weist ein erstes Zerkleinerungsaggregat 42 auf, in dem der Fremdstoff bezüglich seiner Flächen-oder Längenverteilung vergleichmäßigt und somit in einen in wässriger Suspension problemlos förderbaren Zustand überführt wird. Aus dem ersten Zerkleinerungsaggregat gelangt der zuvor zerkleinerte Stoff in der Vorrichtung 40 in einen trogartigen Auffangraum 44, der mit einem Rührwerk 46 versehen ist. Außerdem verfügt die Vorrichtung 40 noch über eine Schwerschmutzsammelkammer 48, in der noch verbliebener Schwerschmutz, der zusätzlich durch die Vorzerkleinerung freigelegt worden sein kann, abgeschieden und von dort von Zeit zu Zeit ausgeschleust wird. Das Rührwerk 46 fördert den in Suspension überführten und eventuell schon vordisintegrierten Stoff in einen Austrittsschacht 50 in dem zum Ausführen eines zweiten Zerkleinerungsschrittes ein zweites Zerkleinerungsaggregat 52 angeordnet ist. Am Austritt des zweiten Zerkleinerungsaggregates 52 befindet sich ein Sieb 54. Diese Sieb hat im Ausführungsbeispiel eine Lochweite von 8 mm, so daß der feinzerkleinerte Stoff dieses Sieb nur passieren kann, wenn er im zweiten Zerkleinerungsaggregat 52 auf die erforderliche Feinheit gebracht worden ist. Gleichzeitig wird der Stoff im zweiten Zerkleinerungsaggregat 52 durch quetschende Werkzeugeinwirkung disintegriert und zerfasert. Der zerkleinerte und disintegrierte Stoff aus der Vorrichtung 40 gelangt dann in den Anlagenbereich der Figur 2 zur weiteren Aufbereitung.

Als Werkzeugbestückung für das erste Zerkleinerungsaggregat 40 kann ein Schneid- und Zerreißwerkzeug verwendet werden, welches im wesentlichen aus parallelen, drehbar angetriebenen Werkzeugträgerwellen besteht, die mit wechselseitig ineinandergreifenden Schneid-,Hack- oder Zerreißmessern besetzt sind. Dadurch, daß die Wellen von oben gesehen gegeneinander rotieren, bilden sie einen Einzugsspalt, in den zu zerkleinerndes Material von alleine eingezogen wird.

Als Werkzeugbestückung für das zweite Zerkleinerungsaggregat 52 hat sich ein rotierender Werkzeugträger als brauchbar erwiesen, der auf einem gedachten Zylindermantel mit Werkzeugelementen besetzt ist, welche mit entsprechenden Gegenwerkzeugen an der Innenseite eines den Rotor umgebenden Gehäuses jeweils beim Rotieren in Eingriff gelangen. In Versuchen haben sich die Werkzeuge des ansich für andere Einsatzzwecke vorgesehenen Condux-Waschgranulators CS 500/1000 IIIA der Firma Condux in Hanau als geeignet erwiesen. Für die Erfindung ist jedoch auch jede andere Werkzeugbestückung verwendbar, die geeignet ist, die angestrebte Verfahrensmaßnahme durchzuführen.

Im Verfahrensschema der Figur 1 ist noch eine weitere Aufarbeitungsvorrichtung 56 erkennbar, die in ihrem Aufbau im wesentlichen demjenigen der Vorrichtung 40 entspricht, und die der Vorrichtung 40 kaskadenartig vorgeschaltet ist. Die zweite Aufarbeitungsvorrichtung 56 unterscheidet sich von der Vorrichtung 40 im wesentlichen dadurch, daß sie als erstes Zerkleinerungsaggregat 58 ein horizontal arbeitendes Schneidorgan aufweist. Die Vorrichtung 56 ist vorgesehen, weil im vorliegenden Ausführungsbeispiel auch der Zopf 24 aus dem Pulper 2 mit zu den wiederaufzuarbeitenden Fremdstoffen hinzugenommen wird. Der Zopf 24 wird über einen Aufgabetrichter 60 dem Erstzerkleinerungsaggregat 58 der Vorrichtung 56 zugeführt, in dem er in kleine Längenabschnitte zerteilt wird. Da der Zopf beispielsweise auch Ballenbindedrähte enthält, muß der Zopfschneider im ersten Zerkleinerungsaggregat 58 entsprechend robust ausgebildet sein. Für die Schonung der weiteren Bearbeitungsaggregate ist es jedoch besonders wichtig, daß in der Vorrichtung 56 über die Schwerschmutzsammelkammer 62 der Schwerschmutz, im wesentlichen in Form von Drahtstücken, ausgeschieden wird. Dieser Schwerschmutz wird in einer nachgeschalteten Entwässerungseinrichtung 64 nachentwässert. Aus dem Schema der Figur 1 ist weiterhin erkennbar, daß das in der Entwässerungseinrichtung 64 abgeschiedene Wasser über eine Pumpe 66 als Spül-und Waschwasser wieder dem Aufgabetrichter 60 der Vorrichtung 56 zugeführt wird. Für den grobzerteilten Zopf ist im Trog der Vorrichtung 56 keine eigentliche Vordisintegration notwendig, weswegen Trog und Rührwerk der Vorrichtung 56 hier vorzugsweise zum Auswaschen des zerteilten Zopfmaterials und zur Unterstützung der Schwerschmutzabscheidung verwendet werden.

Das zweite Zerkleinerungsaggregat 68 der Vorrichtung 56 ist ähnlich ausgebildet wie das Eintrittsorgan 42 der Vorrichtung 40, da eine Disintegration des Zopfmaterials an dieser Stelle noch nicht stattfindet, beziehungsweise nicht stattfinden soll. Wird eine extra Aufarbeitungsvorrichtung für den Zopf vorgesehen, so kann es zweckmäßig sein, die aus der Entwässerungssiebtrommel 28 anfallende erste Leichtschmutzkomponente 30 bereits schon der Zopfaufarbeitungsvorrichtung 56 zuzuführen, was durch eine gestrichelte Leitung 70 angedeutet ist. Diese Maßnahme hängt ganz davon ab, in welcher Größenverteilung und in welchem Zustand die erste Leichtschmutzkomponente anfällt.

Die Figur 2 stellt nun ablaufmäßig den Anlagenteil dar, in dem die aus der Aufarbeitungsvorrichtung 40 erhaltene Fremstoffsuspension ihre weitere Aufbereitung erfährt. Zuerst gelangt der Stoff in eine Rührbütte 72, in der die Disintegration und die Zerfaserung der Faserstoffbestandteile noch vervollständigt werden kann. Die endgültig disintegrierte Fremdstoffsuspension gelangt nun über eine Pumpe 74 in ein Trenn-bzw. Sortieraggregat 76 in dem sie in eine im wesentlichen Faserstoffe enthaltende Fraktion (Faserstoffraktion) und in eine im wesentlichen nicht zerfaserbare Reststoffe enthaltende Reststoffraktion aufgeteilt wird. Als Sortieraggregat 76 hat sich beispielsweise ein sogenannter Turbowasher der Firma Voith in Heidenheim mit einem Lochdurchmesser von 2,6 mm als geeignet erwiesen.

Die Faserstoffraktion aus dem Sortierer 76 gelangt in eine Faserstoffbütte 78 und die Reststoffraktion in eine Reststoffbütte 80. Es soll zuerst der Weg der Faserstoffraktion verfolgt werden. Die weitere Aufbereitung ist im Ausführungsbeispiel darauf abgestellt, daß die Faserstoffraktion als festigkeitssteigernde Langfaserkomponente bei der Herstellung von Wellpappenrohpapieren eingesetzt wird. Aus der Faserstoffbütte 78 gelangt die Faserstoffraktion in eine in der Papierindustrie übliche Eindickeinrichtung 82, von wo aus der eingedickte Faserstoff in einem Behälter 84 zwischengelagert wird. Je nach Anforderung der Nachfolgeaggregate kann der eingedickte Stoff eine Konsistenz zwischen etwa 6 und 20 % atro aufweisen, wobei er im oberen Bereich der genannten Spanne bereits einen krümeligen Zustand einnimt, so daß er, wie in Figur 2 dargestellt, mittels einer Förderschnecke 86 in ein nachfolgendes Mahlaggregat 88 transportiert werden muß. Bei diesem Mahlaggregat handelt es sich vorzugsweise um einen mit Steinzeuggarnierung versehenen Doppelscheibenrefiner. Der gemahlene Stoff gelangt über eine weitere Förderschnecke 90 in eine Verdünnungsbütte 92, von wo aus er in einer dem Fachmann geläufigen starken Verdünnung in einem Vertikalsortierer 94 von restlichen Verunreinigungen befreit wird, so daß er von einer Halbstoffbütte 96 aus der Papierfabrikation zur Verfügung gestellt werden kann.

Die Reststoffraktion aus der Reststoffbütte 80 wird zuerst durch eine zweistufige Zyklontrennanlage 98 geführt, in der insbesondere Anteile ausgeschieden werden, die spezifisch schwerer sind als die den Großteil der Reststoffe ausmachenden Thermoplaste, welche ein spezifisches Gewicht von etwa 1 haben. Die ausgeschiedenen Schwerstoffe werden noch ausgewaschen, wobei die Schwerstoffe selbst auf einem Sieb 100 zurückgehalten und die ausgewaschenen Faserstoffe in die Faserstoffbütte 78 geleitet werden. Auf einem Sieb 102 wird das Reststoffakzept aus der Zyklontrennanlage vorentwässert und dann einer Zentrifuge 104 zur weiteren Entwässerung zugeführt. Das weitgehend entwässerte, wie etwa Konfetti aussehende Thermoplastmaterial aus der Reststoffraktion, wird dann in einem Rohrtrockner 106 vollständig getrocknet und in einem Silo 108 zwischenbevorratet. Zur Trocknung im Trockner 106 kann zumindest teilweise Biogas eingesetzt werden, welches bei der anearobbiologischen Klärung des aus der Altpapierauflösung anfallenden Altpapierfiltrates entsteht.

Das im Silo 108 angesammelte, flockige Thermoplastmaterial wird in einer marktüblichen Agglomerations-und Granulieranlage 110 in ein Kunststoffgranulat in handelsüblicher Form überführt, welches als wiedergewonnener Thermoplasthalbstoff für verschiedenste Weiterverarbeitungszwecke eingesetzt werden kann. Die Anlage 110 wird nicht im einzelnen beschrieben. Es läßt sich beispielsweise eine Plast-Agglomorator-Anlage "Orginal-Pallmann vom Typ PFV 250/60" einsetzen.

Im dargestellten Ausführungsbeispiel der Figur 2 wird aus der Thermoplastgranulieranlage 110 über eine Leitung 112 ein bestimmter Anteil des Thermoplastmaterials abgezweigt und in einer Mühle 114 auf eine Korngröße von 0,6 mm und kleiner zermahlen. Dieses fein gemahlene Thermoplastpulver wird über eine Leitung 116 in das Mahlaggregat 88 für den Faserstoff mit eingeblasen. Wie eingangs bereits erwähnt, läßt sich bei Einhaltung bestimmter Verfahrensbedingungen in dieser Stufe Thermoplastmaterial an den Faserstoff in einer Weise anlagern, die den Papierherstellungsprozess nicht stört, wobei das Thermoplastmaterial aber bei der Weiterverarbeitung des hier im Ausführungsbeispiel vorgesehenen Wellpappenrohpapieres bei erhöhten Temperaturen aktiviert werden kann, so daß sich bessere Festigkeitseigenschaften für die Welle in der Wellpappe ergeben.

## Patentansprüche

1. Verfahren zum Aufbereiten von Altpapier, bei dem das Altpapier in Wasser suspendiert und unter Einwirkung von Agitationsmitteln weitgehend zerfasert wird,
sich im wesentlichen im Auflöseaggregat ansammelnder Schwerschmutz abgesondert und entsorgt wird,
im Auflöseaggregat und/oder in nachgeschalteten Sortiertstufen weiterer Fremdstoff aus der erhaltenen Faserstoffsuspension abgesondert und die gereinigte Faserstoffsuspension für die Papiererzeugung verwendet wird,
dadurch gekennzeichnet, daß der aus den einzelnen Trennstufen anfallende Fremdstoff einer separaten Aufbereitung mit folgenden Schritten unterworfen wird:
a) Zerkleinern des Fremdstoffes in einer ersten Zerkleinerungsstufe in vergleichmäßigte Flächenabschnitte, die in wässriger Suspension förderbar sind,
b) weiteres Zerkleinern der vergleichmäßigten Flächenabschnitte in einer zweiten Zerkleinerungsstufe in kleine Flächenstücke in wässriger Suspension,
c) Disintegrieren der kleinen Flächenstücke in wässriger Suspension,
d) Auftrennen der Suspension in eine im wesentlichen Faserstoff enthaltende Fraktion und eine im wesentlichen nicht disintegrierbare Reststoffe enthaltende Fraktion und
e) Aufbereitung der Reststoffraktion zur Isolierung und Wiederverwertung von darin enthaltenen Thermoplasten.

2. Verfahren nach Anspruch 1, dadurch gekennzeichnet, daß zwischen Verfahrensschritt a) und b) eine Rührwerksbehandlung des Fremdstoffes in wässriger Suspension zur Vorbereitung der Disintegration erfolgt.

3. Verfahren nach Anspruch 1 oder 2, dadurch gekennzeichnet, daß vor Verfahrensschritt a) und/oder gegebenenfalls während des Verfahrensschrittes des Anspruchs 2 eine Schwerschmutzabscheidung erfolgt.

4. Verfahren nach mindestens einem der Ansprüche 1 bis 3, dadurch gekennzeichnet, daß die Verfahrensschritte b) und c) gleichzeitig erfolgen.

5. Verfahren nach Anspruch 3 oder 4, dadurch gekennzeichnet, daß die Verfahrensschritte a), b) und c) nach Anspruch 1, sowie der Vefahrensschritte nach Anspruch 2 und 3 durch Verwendung einer kombinierten Vorrichtung erfolgen.

6. Verfahren nach mindestens einem der Ansprüche 1 bis 5, dadurch gekennzeichnet, daß die erste Zerkleinerung des Fremstoffes nach Verfahrensschritt a) zu Flächenabschnitten mit einem größten Durchmesser von weniger als 40 mm erfolgt.

7. Verfahren nach mindestens einem der Ansprüche 1 bis 6, dadurch gekennzeichnet, daß die zweite Zerkleinerung des Rohmaterials zu kleinen Flächenstücken nach Verfahrensschritt b) zu Flächenstücken mit einem größten Durchmesser von 2 bis 15 mm, vorzugsweise 6 bis 12 mm erfolgt.

8. Verfahren nach mindestens einem der Ansprüche 1 bis 7, dadruch gekennzeichnet, daß am Ausgang der zweiten Zerkleinerungsstufe ein Sieb verwendet wird, welches die Größe der durchgehenden kleinen Flächenstücke im wesentlichen begrenzt.

9. Verfahren nach mindestens einem der Ansprüche 1 bis 8, bei dem der Fremdstoff auch den Fremdstoffzopf aus dem Altpapierauflöser umfaßt, dadurch gekennzeichnet, daß der Zopf vor Verfahrensschritt a) einer ein- oder zweistufigen Grobzerkleinerung gegebenenfalls mit Schwerschmutzabscheidung, unterworfen wird.

10. Verfahren nach mindestens einem der Ansprüche 1 bis 9, dadurch gekennzeichnet, daß die Stoffsusupension zwischen den Verfahrensschritten c) und d) zur weiteren Disintegration in einer Rührbütte zwischengelagert wird.

11. Verfahren nach mindestens einem der Ansprüche 1 bis 10, dadurch gekennezeichnet, daß die im wesentlichen Faserstoffe enthaltende Fraktion einer Nachsortierung unterworfen wird und der Spuckstoff aus dieser Nachsortierung der die Reststoffe enthaltenden Fraktion zugegeben wird.

12. Verfahren nach mindestens einem der Ansprüche 1 bis 11, dadurch gekennzeichnet, daß aus der Reststoffraktion in einer Sortierstufe Anteile ausgeschieden werden, die spezifisch schwerer als Thermoplaste sind.

13. Verfahren nach Anspruch 12, dadurch gekennzeichnet, daß die Abtrennung der spezifisch schweren Teile mittels Zykloneinrichtungen erfolgt.

14. Verfahren nach mindestens einem der Ansprüche 1 bis 13, dadurch gekennzeichnet, daß die Reststoffraktion entwässert und getrocknet wird.

15. Verfahren nach Anspruch 14, dadurch gekennzeichnet, daß der Reststoff granuliert wird.

16. Verfahren nach mindestens einem der Ansprüche 1 bis 15, dadurch gekennzeichnet, daß die in Schritt d) von Anspruch 1 abgetrennte Faserstoffsuspension bis auf Stoffdichten von 6% atro bis 15% atro eingedickt und der eingedickte Faserstoff in einem Faserstoffmahlaggregat gemahlen wird.

17. Verfahren nach Anspruch 16, dadurch gekennzeichnet, daß ein mit Steinzeuggarnierung versehenes Faserstoffmahlaggregat verwendet wird.

18. Verfahren nach Anspruch 16 oder 17, dadurch gekennzeichnet, daß dem Faserstoff beim Mahlen ein Anteil des Reststoffes erhalten durch das Verfahren nach Anspruch 14 oder 15 in feingemahlener Form zugegeben wird.

19. Verfahren nach Anspruch 18, dadurch gekennzeichnet, daß der Reststoff auf eine Korngröße von 0,6 mm und weniger gemahlen wird.

20. Verfahren nach Anspruch 18 oder 19, dadurch gekennzeichnet, daß gemahlener Reststoff dem Faserstoff in Anteilen von 20 bis 60 Gewichtsprozent, bezogen auf Faserstoff und Reststoff zugegeben wird.

21. Verfahren nach mindestens einem der Ansprüche 18 bis 20, dadurch gekennzeichnet, daß die Temperaturführung bei der Mahlung des Faserstoffes derart erfolgt, daß der feingemahlene Reststoff am Faserstoff fixiert wird.

22. Anwendung des Verfahrens nach einem der Ansprüche 18 bis 20 in der Herstellung von Wellpappe, dadurch gekennzeichnet, daß der Faserstoff für die Mittellage der Wellpappe verwendet wird.

## Claims

1. A process for treating waste paper, in which the waste paper is suspended in water and extensively defibred by the action of agitating means, heavy dirt substantially collecting in the repulping unit is separated and disposed of, additional foreign matter in the repulping unit and/or in sorting stages downstream thereof is separated from the fibre-bearing suspension obtained and the cleaned fibre-bearing suspension is used for paper production, characterized in that the foreign matter arising from the individual separating stages is subjected to separate treatment with the following steps:
a) comminution of the foreign matter in a first comminution stage into homogeneous planar portions, which may be brought into aqueous suspension,
b) further comminution of the homogeneous planar portions into small planar pieces in aqueous suspension in a second comminution stage,
c) disintegration of the small planar pieces in aqueous suspension,
d) separation of the suspension into a fraction essentially containing fibrous material and a fraction essentially containing non-disintegratable residual matter and
e) treatment of the residual matter fraction for the isolation and reutilization of thermoplasts contained therein.

2. A process according to claim 1, characterized in that between process steps a) and b) there is effected mixing treatment of the foreign matter in aqueous suspension in preparation for disintegration.

3. A process according to claim 1 or claim 2, characterized in that before process step a) and/or optionally during the process step of claim 2 there is effected heavy dirt separation.

4. A process according to at least one of claims 1 to 3, characterized in that the process steps b) and c) are effected simultaneously.

5. A process according to claim 3 or claim 4, characterized in that the process steps a), b) and c) according to claim 1, as well as the process steps according to claims 2 and 3 are effected by use of a combined device.

6. A process according to at least one of claims 1 to 5, characterized in that the first comminution of the foreign matter according to process step a) results in planar portions with a maximum diameter of less than 40 mm.

7. A process according to at least one of claims 1 to 6, characterized in that the second comminution of the raw material into small planar pieces according to process step b) results in small planar pieces with a maximum diameter of 2 to 15 mm, preferably 6 to 12 mm.

8. A process according to at least one of claims 1 to 7, characterized in that at the start of the second comminution stage a sieve is used which substantially limits the size of the small planar pieces passing through.

9. A process according to at least one of claims 1 to 8, in which the foreign matter also comprises the foreign matter plait from the waste paper repulper, characterized in that the plait is subjected, before process step a), to one- or two-stage crushing, optionally with heavy dirt separation.

10. A process according to at least one of claims 1 to 9, characterized in that the matter suspension is interposed in an agitation vat between process steps c) and d) for further disintegration.

11. A process according to at least one of claims 1 to 10, characterized in that the substantially fibre-containing fraction is subjected to secondary screening and the screen rejects from this secondary screening are added to the fraction containing the residual matter.

12. A process according to at least one of claims 1 to 11, characterized in that constituents of greater relative density than thermoplasts are separated from the residual matter fraction in a screening stage.

13. A process according to claim 12, characterized in that separation of the parts of greater relative density is effected by means of cyclone apparatuses.

14. A process according to at least one of claims 1 to 13, characterized in that the residual matter fraction is dewatered and dried.

15. A process according to claim 14, characterized in that the residual matter is granulated.

16. A process according to at least one of claims 1 to 15, characterized in that the fibre-bearing suspension separated in step d) of claim 1 is thickened to stock densities of 6% abs. dry to 15 % abs. dry and the thickened fibrous material is ground in a fibrous material grinding unit.

17. A process according to claim 16, characterized in that a fibrous material grinding unit provided with stoneware trim is used.

18. A process according to claim 16 or claim 17, characterized in that a portion of the residual material obtained by the process according to claim 14 or claim 15 is added in finely ground form to the fibrous material during grinding.

19. A process according to claim 18, characterized in that the residual material is ground to a grain size of 0.6 mm and less.

20. A process according to claim 18 or claim 19, characterized in that ground residual material is added to the fibrous material in amounts of from 20 to 60 percent by weight, with respect to the fibrous material and residual material.

21. A process according to at least one of claims 18 to 20, characterized in that temperature control during grinding of the fibrous material is such that the finely ground residual material is fixed to the fibrous material.

22. Application of the process according to any one of claims 18 to 20 in the production of corrugated cardboard, characterized in that the fibrous material is used for the middle layer of the corrugated cardboard.

## Revendications

1. Procédé de traitement de vieux papiers, dans lequel les vieux papiers sont mis en suspension dans de l'eau et sont profondément raffinés sous l'action de moyens d'agitation, des déchets lourds qui s'accumulent essentiellement dans l'appareil de trituration sont sensiblement séparés et éliminés, de la matière étrangère supplémentaire est, dans l'appareil de trituration et/ou dans des étapes de triage ultérieures, séparée de la suspension de matière fibreuse obtenue, et la suspension de matière fibreuse purifiée est utilisée pour la production de papier, caractérisé en ce que la matière étrangère provenant des différentes étapes de séparation est soumise à un traitement séparé comportant les étapes suivantes :
a) une fragmentation de la matière étrangère, dans une première étape de fragmentation, en segments de surface uniformisés qui peuvent être transportés en suspension aqueuse,
b) une fragmentation ultérieure des segments de surface uniformisés, dans une deuxième étape de fragmentation, en petits morceaux de surface en suspension aqueuse,
c) une désintégration des petits morceaux de surface en suspension aqueuse,
d) une séparation de la suspension en une fraction contenant sensiblement de la matière fibreuse et une fraction contenant sensiblement des résidus non désintégrables, et
e) un traitement de la fraction de résidus pour isoler et recycler des matières thermoplastiques contenues dedans.

2. Procédé selon la revendication 1, caractérisé en ce que, entre les étapes a) et b), un traitement dans un agitateur de la matière étrangère en suspension aqueuse a lieu pour la préparation de la désintégration.

3. Procédé suivant l'une des revendications 1 et 2, caractérisé en ce qu'une séparation de déchets lourds a lieu avant l'étape a) du procédé et/ou éventuellement pendant l'étape de la revendication 2.

4. Procédé suivant au moins l'une des revendications 1 à 3, caractérisé en ce que les étapes b) et c) du procédé ont lieu simultanément.

5. Procédé suivant l'une des revendications 3 et 4, caractérisé en ce que les étapes a), b) et c) de la revendication 1 ainsi que l'étape selon l'une des revendications 2 et 3 ont lieu par utilisation d'un dispositif combiné.

6. Procédé suivant au moins l'une des revendications 1 à 5, caractérisé en ce que la première fragmentation de la matière étrangère selon l'étape a) du procédé a lieu en segments de surface ayant un diamètre maximal inférieur à 40 mm.

7. Procédé suivant au moins l'une des revendications 1 à 6, caractérisé en ce que la deuxième fragmentation de la matière brute en petits morceaux de surface selon l'étape b) du procédé a lieu en morceaux de surface ayant un diamètre maximal de 2 à 15 mm, de préférence de 6 à 12 mm.

8. Procédé suivant au moins l'une des revendications 1 à 7, caractérisé en ce qu'à la sortie de la deuxième étape de fragmentation on utilise un tamis qui limite sensiblement la grandeur des petits morceaux de surface en train de passer.

9. Procédé suivant au moins l'une des revendications 1 à 8, dans lequel la matière étrangère comporte aussi la tresse de matières étrangères provenant du triturateur de vieux papiers, caractérisé en ce que la tresse est, avant l'étape a) du procédé, soumise à une fragmentation grossière en une ou deux étapes, éventuellement avec séparation des déchets lourds.

10. Procédé suivant au moins l'une des revendications 1 à 9, caractérisé en ce que la suspension de matière est, entre les étapes c) et d) du procédé, amenée de manière intermédiaire à une désintégration supplémentaire dans un cuvier mélangeur.

11. Procédé suivant au moins l'une des revendications 1 à 10, caractérisé en ce que la fraction contenant sensiblement des matières fibreuses est soumise à un triage ultérieur et en ce que les détritus provenant de ce triage ultérieur sont ajoutés à la fraction contenant les résidus.

12. Procédé suivant au moins l'une des revendications 1 à 11, caractérisé en ce que des fractions, qui sont spécifiquement plus lourdes que des matières thermoplastiques, sont séparées de la fraction de résidus dans une étape de triage.

13. Procédé suivant la revendication 12, caractérisé en ce que la séparation des particules spécifiquement lourdes a lieu au moyen de dispositifs à cyclone.

14. Procédé suivant au moins l'une des revendications 1 à 13, caractérisé en ce que la fraction de résidus est déshydratée et séchée.

15. Procédé suivant la revendication 14, caractérisé en ce que la matière résiduaire est granulée.

16. Procédé suivant au moins l'une des revendications 1 à 15, caractérisé en ce que la suspension de matière fibreuse, isolée dans l'étape d) de la revendication 1, est épaissie jusqu'à des densités de matière de 6 % de siccité absolue jusqu'à 15 % de siccité absolue et en ce que la matière fibreuse épaissie est broyée dans un appareil de broyage de matière fibreuse.

17. Procédé suivant la revendication 16, caractérisé en ce qu'on utilise un appareil de broyage de matière fibreuse pourvu d'un garnissage en grès.

18. Procédé suivant l'une des revendications 16 et 17, caractérisé en ce qu'une fraction de la matière résiduaire obtenue par le procédé suivant l'une des revendications 14 et 15 est, sous forme finement broyée, ajoutée à la matière fibreuse au cours du broyage.

19. Procédé suivant la revendication 18, caractérisé en ce que la matière résiduaire est broyée à une dimension granulaire de O,6 mm et moins.

20. Procédé suivant l'une des revendications 19 et 19, caractérisé en ce que de la matière résiduaire broyée est ajoutée à la matière fibreuse en des fractions de 20 à 60 % en poids, par rapport à la matière fibreuse et à la matière résiduaire.

21. Procédé suivant au moins l'une des revendications 18 à 20, caractérisé en ce que la conduite de la température s'effectue au cours du broyage de la matière fibreuse de telle façon que la matière résiduaire finement broyée soit fixée sur la matière fibreuse.

22. Utilisation du procédé suivant l'une des revendications 18 à 20 dans la fabrication de carton ondulé, caractérisée en ce que la matière fibreuse est utilisée pour la couche médiane du carton ondulé.
